# EUROPÄISCHE PATENTANMELDUNG

(11) **EP 0 923 910 A1**
(43) Veröffentlichungstag der Anmeldung: **23.06.1999**
(21) Anmeldenummer: 98123941.1
(22) Anmeldetag: 16.12.1998
(51) Int. Cl.: A61C 8/00

(54) **Dentalimplantat**

(30) Priorität: 17.12.1997 DE 19755987
(71) Anmelder: C. HAFNER GmbH & Co., D-75173 Pforzheim (DE)
(72) Erfinder: Amann, Hans, 70597 Stuttgart (DE); Hartmann, H.-J., Dr., 82327 Tutzing (DE)
(74) Vertreter: Trappenberg, Hans

(57) **Zusammenfassung**

Ein Dentalimplantat weist ein Aufbauteil 1 auf, welches zur Aufnahme einer Suprakonstruktion dient. Das Aufbauteil 1 weist eine Hülse 13 auf, durch welche ein Befestigungsmittel 3 geführt wird. Mittels des Befestigungsmittels 3 ist die Suprakonstruktion am Aufbauteil 1 befestigbar. Die Suprakonstruktion weist innen eine Metallschicht 15 auf, welche einstückig mit der Hülse 13 ausgebildet ist.

## Beschreibung

Die Erfindung betrifft ein Dentalimplantat nach dem Oberbegriff des Anspruchs 1, mit einem Aufbauteil, welches zur Aufnahme einer Suprakonstruktion dient, welche eine Hülse aufweist, durch welche ein Befestigungsmittel geführt wird, mittels welchem die Suprakonstruktion am Aufbauteil befestigbar ist.

Ein derartiges Implantat ist beispielsweise aus dem Artikelkatalog "FRIALIT-2-Ästhetisch vollendete Implantat-Prothetik" der Firma FRIATEC Aktiengesellschaft, D-68222 Mannheim, bekannt. Bei dem bekannten Implantat wird die Hülse in die Suprakonstruktion einmodelliert. Die Hülse ist daher so ausgebildet, daß sie angußfähig ist. Hierdurch sitzt die Hülse zwar fest in der Suprakonstruktion, jedoch läßt es sich nicht ganz vermeiden, daß sich zwischen der Hülse und der Suprakonstruktion ein Spalt ausbildet, in den kleinste Organismen eindringen können.

Darüber hinaus läßt es sich selbst bei sehr präziser Anfertigung der Suprakonstruktion nicht verhindern, daß sich zwischen einen regelmäßig bei einem Aufbauteil ausgebildeten Implantataufbauteller und der darauf aufsetzenden Suprakonstruktion ein Spalt ausbildet. In diesem Spalt können sich ebenfalls kleinste Organismen wie beispielsweise Bakterien ansiedeln. Dies ist sehr nachteilig, da die Bakterien im ungünstigsten Fall beim Implantatträger eine Entzündung hervorrufen können.

Des weiteren besteht zwischen dem Befestigungsmittel und der Innenwandung der Hülse ein relativ großer Spalt. Denn das Befestigungsmittel muß ohne großen Kraftaufwand in die Hülse einführbar sein, was bedeutet, daß zwischen Befestigungsmittel und Hülse ein geringes Spiel vorhanden sein muß.

Es ist Aufgabe der Erfindung ein eingangs genanntes Dentalimplantat derart auszubilden, daß die Suprakonstruktion nahezu spaltfrei mit dem Aufbauteil verbunden werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung weist die Suprakonstruktion innen eine Metallschicht auf, welche einstückig mit der Hülse ausgebildet ist. Durch die einstückige Ausbildung wird in vorteilhafter Weise erreicht, daß die Hülse absolut spaltfrei mit der Metallschicht der Suprakonstruktion verbunden ist. Um die Hülse herum kann sich kein Spalt ausbilden, durch den beispielsweise Bakterien in das Innere der Suprakonstruktion eindringen können. Neben der so erreichten absoluten Dichtheit wird darüber hinaus in besonders vorteilhafter Weise noch die Festigkeit der Verbindung der Hülse mit der Suprakonstruktion erreicht. Die Suprakonstruktion läßt sich daher sehr fest mit dem Aufbauteil verbinden.

Als besonders günstig hat es sich herausgestellt, die Metallschicht durch Aufgalvanisieren auf das Aufbauteil herzustellen. Dies läßt sich beispielsweise dadurch erreichen, daß das Aufbauteil und die Metallschicht aus Materialien bestehen, welche beim Galvanisieren keine Verbindung miteinander eingehen, wie dies beispielsweise bei einem Aufbauteil aus Platin und einer Metallschicht aus Gold der Fall ist. Sollten Metalle verwendet werden, welche beim Galvanisieren eine Verbindung miteinander eingehen, müßte auf das Aufbauteil vor dem Aufgalvanisieren eine Trennschicht aufgebracht werden.

Durch das Aufgalvanisieren der Metallschicht auf das Aufbauteil läßt sich eine Suprakonstruktion herstellen, welche im höchsten Maße paßgenau auf das Aufbauteil aufgebracht werden kann. Dies wirkt sich zum einen sehr günstig auf die Einführung des Befestigungsmittels aus, da die Hülse nach dem Galvanisieren im höchsten Maße positionsgenau mit der entsprechenden im Aufbauteil ausgebildeten Öffnung korrespondiert. Zum anderen kann durch die galvanische Herstellung der Metallschicht diese so ausgebildet werden, daß sie spaltfrei auf den Implantataufbauteller aufsetzbar ist. Durch die hochpräzise Ausbildung der Metallschicht kann darauf verzichtet werden, die Suprakonstruktion mit einer größeren Kraft auf den Implantataufbauteller anzupressen. Dies bringt wesentliche Vorteile bei der Handhabung des erfindungsgemäßen Dentalimplantats mit sich. Darüber hinaus kann der Imlantataufbauteller auch sehr dünn ausgebildet werden. Statt der bisher üblichen Dicke von 1 bis 3 Millimeter kann seine Dicke beispielsweise nur noch 0,8 Millimeter betragen. Hierdurch kann der Implantataufbauteller subgingival zu liegen kommen. Dies ist ein großer ästhetischer Vorteil im paraimplantären Areal.

Bei einer weiteren Ausführungsform der Erfindung ist vorgesehen, daß die Hülse innen wenigstens teilweise konisch ausgebildet ist. In besonders vorteilhafter Weise verläuft der Konus in einem Winkel von etwa 15° zur Achse der Hülse. Durch die konische Ausbildung der Hülse ist es möglich, ein Befestigungsmittel zu verwenden, welches sich nach Einführung in die Hülse dicht an den Konus anlegt. Dies ist beispielsweise bei einer Inbusschraube mit einem Schraubenkopf der Fall, welcher entsprechend zum konischen Bereich der Hülse wenigstens teilweise konisch ausgebildet ist. Wird die Suprakonstruktion mittels der Inbusschraube mit dem Aufbauteil verbunden, übt der Konus des Schraubenkopfes auf den Konus der Hülse eine Kraft aus, wodurch zum einen die Suprakonstruktion fest auf dem Aufbauteil gehalten wird, und zum anderen ein Spalt zwischen dem Schraubenkopf und der Hülse verhindert wird. Durch die konische Ausbildung der Hülse und der konischen Ausbildung des Schraubenkopfes wird somit bei leichter Einführung des Befestigungsmittels in die Hülse verhindert, daß zwischen Befestigungsmittel und Hülse ein Spalt besteht.

Bei einer weiteren Ausführungsform der Erfindung ist vorgesehen, daß sich der Inbus etwa durch den gesamten Schraubenkopf erstreckt. Hierdurch läßt sich der Schraubenkopf über einen sehr weiten Bereich kürzen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Figur 1a: eine erste Ausführungsform eines erfindungsgemäßen Aufbauteils in Seitenansicht,
- Figur 1b: das in Figur 1a dargestellte Aufbauteil in der Draufsicht,
- Figur 2a: eine zweite Ausführungsform eines erfindungsgemäßen Aufbauteils in Seitenansicht,
- Figur 2b: das in Figur 2a dargestellte Aufbauteil in der Draufsicht und
- Figur 2c: eine Detaildarstellung eines in eine in der zweiten Ausführungsform enthaltene Ausnehmung eingesetzten Verschlußteils.

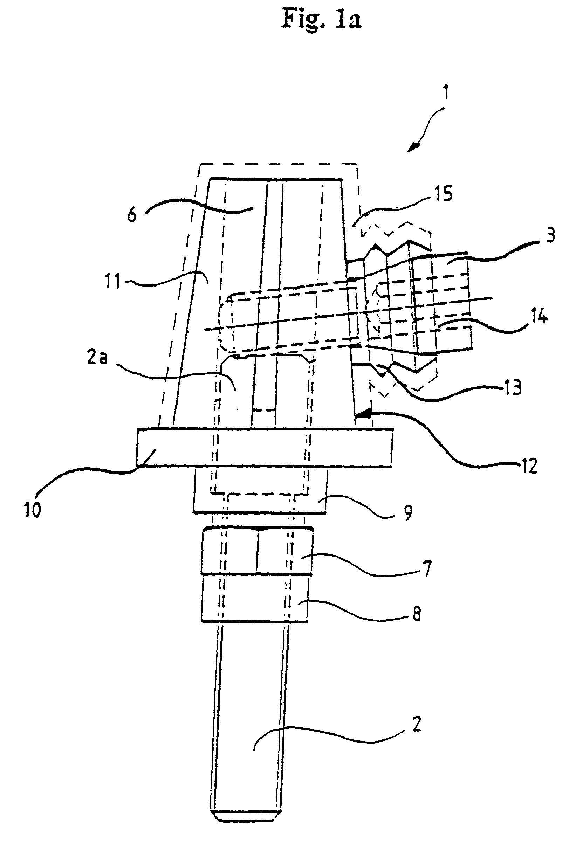

Wie der Figur 1a entnommen werden kann, weist eine erste Ausführungsform eines Aufbauteils 1 in axialer Richtung eine Innenbohrung 6 auf, deren Durchmesser etwa dem Durchmesser des Kopfes 2a einer Schraube 2 entspricht. Die Bohrung 6 weist an ihren dem koronalen Ende abgewandten Ende eine schulterförmige Verkleinerung auf, auf die der Kopf 2a der Halteschraube 2 aufsitzt. Das Aufbauteil 1 läßt sich somit mittels der Halteschraube 2 an einem nicht gezeigten Implantatpfosten befestigen.

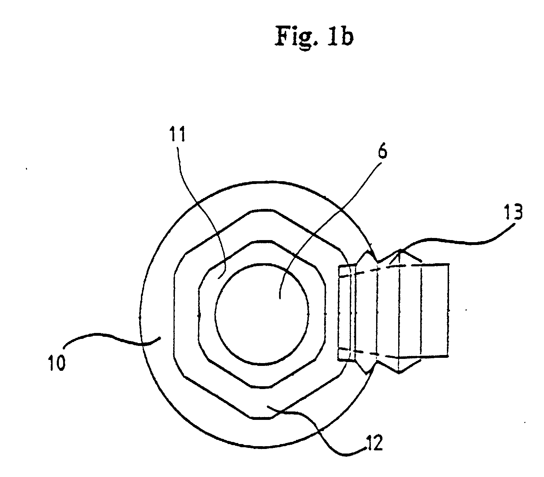

Das Aufbauteil 1 weist an seinem dem koronalen Ende abgewandten Ende eine sechskantförmig ausgebildete Scheibe 7 auf. Die Scheibe 7 hat zweite Anlageflächen, welche im im Implantatpfosten eingebauten Zustand in einer am koronalen Ende des Implantatpfostens angeordneten Ausnehmung ausgebildeten ersten Anlageflächen gegenüberstehen. Durch den erreichten Formschluß wird eine Rotationssicherung des Aufbauteils 1 erreicht. Zur Verbesserung der Führung des Aufbauteils 1 im Implantatpfosten sind ober- und unterhalb der sechskantförmigen Scheibe 7 kreisförmige Scheiben 8, 9 angeordnet. Oberhalb der Scheibe 9 schließt sich ein Implantataufbauteller 10 an, auf welchem ein Implantataufbau 11 angeordnet ist. Der Implantataufbau 11 ist konisch und sechskantfömig ausgebildet. Die durch die konische sechskantförmige Ausbildung des Implantataufbaus 11 erhaltenen planen Flächen 12 haben die selbe Lage wie die Flächen der sechskantförmigen Scheibe 7, wie dies insbesondere der Figur 1b entnommen werden kann. Das heißt, die Lage der sechskantförmigen Scheibe 7 wird durch die Lage des sechskantförmigen Implantataufbaus 11 wiedergegeben. Hierdurch läßt sich anhand der Stellung des Implantataufbaus 11 die Stellung der sechskantförmigen Scheibe 7 feststellen. Dies bringt beim Einsetzen des Aufbauteils 1 in den Implantatpfosten große Vorteile im Hinblick auf die richtige Positionierung des Aufbauteils 1.

Das Aufbauteil 1 weist des weiteren eine etwa in einem Winkel von 100° Grad zur Achse der Innenbohrung 6 des Aufbauteils 1 verlaufende Gewindebohrung auf, in welcher eine Befestigungsschraube 3 angeordnet ist. Die Befestigungsschraube 3 dient zum einen der Befestigung einer nicht gezeigten Suprakonstruktion, welche eine innere Metallschicht 15 aufweist, am Aufbauteil 1. Zum anderen wird mittels der Befestigungsschraube 3 die Halteschraube 2 in ihrer Lage fixiert, so daß sie aufdrehgesichert ist. Dies geschieht dadurch, daß die Schraube 3 im eingeschraubten Zustand auf den Kopf 2a der Halteschraube 2 drückt.

Die innere Metallschicht 15 der nicht gezeigten Suprakonstruktion ist einstückig mit einer Schraubenkopfhülse 13 verbunden, welche zur Abdichtung des Aufbauteils 1 vorgesehen ist. Die Schraubenkopfhülse 13 liegt plan auf einer Fläche 12 des sechskantförmigen Implantataufbaus 11. Die Schraubenkopfhülse 13 ist innen teilweise konisch ausgebildet. Entsprechend dieses Konus weist der Kopf der Befestigungsschraube 3 ebenfalls einen konischen Bereich auf. Die Steigungen der beiden Konusse sind gleich. Hierdurch ergibt sich eine sehr gute Dichtigkeit der Befestigung der Suprakonstruktion am Aufbauteil 1.

Die Metallschicht 15 wird durch Aufgalvanisieren auf den Implantataufbau 11 hergestellt. Die Schraubenkopfhülse 13 wird in die Metallschicht 15 eingalvanisiert. Durch das Aufgalvanisieren der Metallschicht 15 auf den Implantataufbau 11 wird ein äußerst präziser Abschluß zum Implantataufbauteller 10 erreicht. Der Abschluß kann so präzise ausgebildet werden, daß sich zwischen der Metallschicht 15 und dem Implantataufbauteller 10 kein Spalt ergibt. Der Übersichtlichkeit wegen wurde die Metallschicht 15 in Figur 1b nicht dargestellt.

Die Schraube 3 ist als Inbusschraube ausgebildet. Durch den Inbus 14 der Schraube 3 sowie durch die konische Ausbildung der Hülse 13 beziehungsweise des Schraubenkopfes der Schraube 3 ist es möglich, den Schraubenkopf bis zu 50 Prozent zu kürzen.

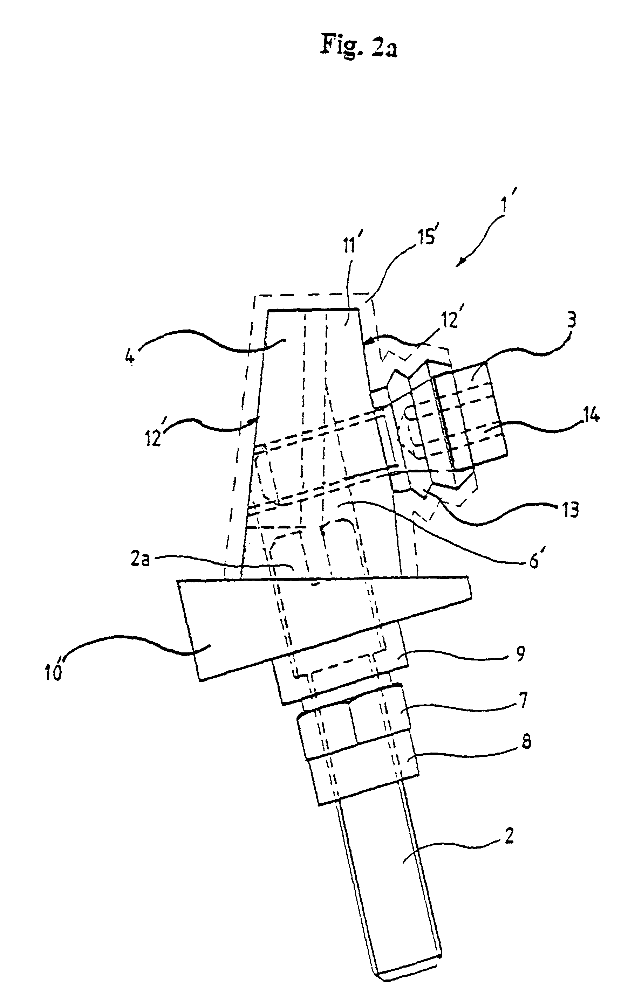

Bei der in den Figuren 2a bis 2c dargestellten zweiten Ausführungsform der Erfindung handelt es sich um ein sogenanntes abgewinkeltes beziehungsweise asymmetrisch ausgebildetes Aufbauteil, welches immer dann Verwendung findet, wenn der Implantatpfosten schräg im Kiefer verankert werden muß. In den Figuren 2a bis 2c sind der Einfachheit halber die Teile, welche sich nicht von den in den Figuren 1a und 1b dargestellten Teilen unterscheiden, mit den selben Bezugszeichen wie in den Figuren 1a und 1b versehen.

Wie der Figur 2a entnommen werden kann, weist ein Aufbauteil 1' eine Innenbohrung 6' auf, deren Durchmesser etwa dem Durchmesser des Kopfes 2a einer Schraube 2 entspricht. Die Achse der Bohrung 6' verläuft in einem Winkel von etwa 15° Grad zur Achse des Aufbauteils 1'. Des weiteren weist die Bohrung 6' an ihrem dem koronalen Ende abgewandten Ende eine schulterförmige Verkleinerung auf, auf die der Kopf 2a der Halteschraube 2 aufsitzt. Das Aufbauteil 1' läßt sich somit mittels der Halteschraube 2 an einem nicht gezeigten Implantatpfosten befestigen.

Entsprechend der ersten Ausführungsform weist das Aufbauteil 1' an seinem dem koronalen Ende abgewandten Ende eine sechskantförmig ausgebildete Scheibe 7 auf, welche zweite Anlageflächen hat, welche im im Implantatpfosten eingebauten Zustand in einer am koronalen Ende des Implantatpfostens angeordneten Ausnehmung ausgebildeten ersten Anlageflächen gegenüberstehen. Durch den erreichten Formschluß wird eine Rotationssicherheit des Aufbauteils 1' erreicht. Zur Verbesserung der Führung des Aufbauteils 1' im Implantatpfosten sind ober- und unterhalb der sechskantförmigen Scheibe 7 kreisförmige Scheiben 8, 9 angeordnet. Oberhalb der Scheibe 9 schließt sich ein Implantataufbauteller 10' an, auf welchem ein Implantataufbau 11' angeordnet ist. Der Implantataufbauteller 10' ist keilförmig ausgebildet, wobei die Oberseite mit der Unterseite einen Winkel von etwa 15° Grad einschließt. Hierdurch verläuft die Oberseite rechtwinklig zur Achse des Implantataufbaus 11' und die Unterseite rechtwinklig zur Achse der Innenbohrung 6' des Aufbauteils 1'.

Der Implantataufbau 11' ist konisch ausgebildet und weist zwei gegenüberliegende plane Führungsflächen 12' auf. Die planen Führungsflächen 12' haben die selbe Lage wie zwei entsprechende gegenüberliegende Flächen der sechskantförmigen Scheibe 7. Das heißt, die Lage der sechskantförmigen Scheibe 7 wird durch die Lage der gegenüberliegenden Führungsflächen 12' wiedergegeben.

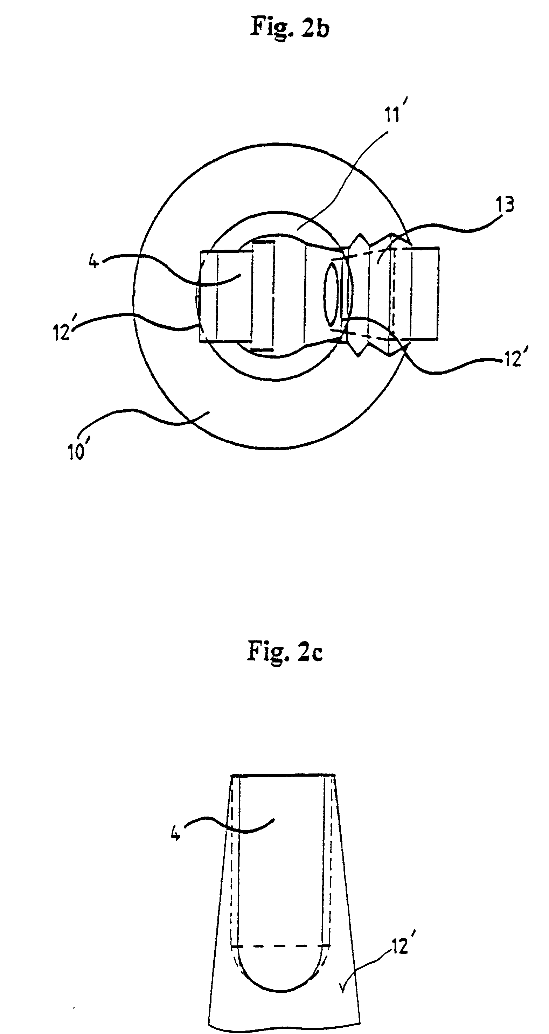

Durch die Lage der Innenbohrung 6' des Aufbauteils 1' in einem Winkel zur Achse des Aufbauteils 1' ist im Aufbauteil 1' eine langlochförmige Öffnung ausgebildet. Wie insbesondere der Figur 2c entnommen werden kann, ist in der langlochförmigen Öffnung ein Verschlußteil 4 angeordnet. Das Verschlußteil 4 ist über eine Schwalbenschwanzführung mit dem Aufbauteil 1' verbunden. Das Verschlußteil 4 ist läßt sich somit vom koronalen Ende des Implantataufbaus 11' in die langlochförmige Ausnehmung schieben. Hierdurch ist die langlochförmige Ausnehmung nahezu vollständig ausgefüllt, so daß sie sehr einfach abgedichtet werden kann.

Das Verschlußteil 4 beziehungsweise die Schwalbenschwanzführung sind so ausgebildet, daß das dem koronalen Ende abgewandte Ende des Verschlußteils 4 auf dem Schraubenkopf 2a der Schraube 2 aufliegt. Hierdurch wird auf die Schraube 2 ein Druck ausgeübt, durch welchen ein unbeabsichtigtes Aufdrehen der Schraube 2 verhindert wird.

Das Aufbauteil 1' weist des weiteren eine etwa in einem Winkel von 100° Grad zur Achse des Implantataufbaus 11' verlaufende Gewindebohrung auf, in welcher eine Befestigungsschraube 3 angeordnet ist. Die Befestigungsschraube 3 dient zum einen der Befestigung einer nicht gezeigten Suprakonstruktion, welche eine innere Metallschicht 15' aufweist, am Aufbauteil 1'. Zum anderen wird das Verschlußteil 4 mittels der Befestigungsschraube 3 in seiner Lage fixiert, da die Befestigungsschraube 3 sich bis in eine im Verschlußteil 4 angeordnete Gewindebohrung erstreckt.

Die innere Metallschicht 15' der nicht gezeigten Suprakonstruktion ist entsprechend der ersten Ausführungsform einstückig mit einer Schraubenkopfhülse 13 verbunden, welche zur Abdichtung des Aufbauteils 1' plan auf einer Fläche 12' des Implantataufbaus 11' liegt. Die Schraubenkopfhülse 13 ist innen teilweise konisch ausgebildet. Entsprechend dieses Konus weist der Kopf der Befestigungsschraube 3 ebenfalls einen konischen Bereich auf. Die Steigungen der beiden Konusse sind gleich. Hierdurch ergibt sich eine sehr gute Dichtigkeit der Befestigung der Suprakonstruktion am Aufbauteil 1.

Die Metallschicht 15' wird durch Aufgalvanisieren auf den Implantataufbau 11' hergestellt. Die Schraubenkopfhülse 13 wird in die Metallschicht 15' eingalvanisiert. Durch das Aufgalvanisieren der Metallschicht 15' auf den Implantataufbau 11' wird ein äußerst präziser Abschluß zum Implantataufbauteller 10' erreicht. Der Abschluß kann so präzise ausgebildet werden, daß sich zwischen der Metallschicht 15' und dem Implantataufbauteller 10' kein Spalt ergibt. Der Übersicht wegen wurde die Metallschicht 15' in Figur 2b nicht dargestellt.

Die Schraube 3 ist ebenfalls als Inbusschraube ausgebildet. Durch den Inbus 14 der Schraube 3 sowie durch die konische Ausbildung der Hülse 13 beziehungsweise des Schraubenkopfes der Schraube 3 ist es möglich, den Schraubenkopf bis zu 50 Prozent zu kürzen.

## Patentansprüche

1. Dentalimplantat mit einem Aufbauteil (1; 1'), welches zur Aufnahme einer Suprakonstruktion dient, welche eine Hülse (13) aufweist, durch welche ein Befestigungsmittel (3) geführt wird, mittels welchem die Suprakonstruktion am Aufbauteil (1; 1') befestigbar ist,
dadurch gekennzeichnet,
daß die Suprakonstruktion innen eine Metallschicht (15; 15') aufweist, welche einstückig mit der Hülse (13) ausgebildet ist.

2. Dentalimplantat nach Anspruch 1,
dadurch gekennzeichnet,
daß die Metallschicht (15; 15') durch Aufgalvanisieren auf das Aufbauteil (1; 1') hergestellt ist.

3. Dentalimplantat nach Anspruch 1 oder 2,
dadurch gekennzeichnet,
daß die Hülse (13) innen wenigstens teilweise konisch ausgebildet ist.

4. Dentalimplantat nach Anspruch 3,
dadurch gekennzeichnet,
daß der Konus in einem Winkel von etwa 15 ° zur Achse der Hülse (13) verläuft.

5. Dentalimplantat nach einem der Ansprüche 1 bis 4,
dadurch gekennzeichnet,
daß das Befestigungsmittel (3) eine Inbusschraube (3) ist, mit einem Schraubenkopf, welcher entsprechend zum konischen Bereich der Hülse (13) wenigstens teilweise konisch ausgebildet ist.

6. Dentalimplantat nach Anspruch 5,
dadurch gekennzeichnet,
daß sich der Inbus (14) etwa durch den gesamten Schraubenkopf erstreckt.
